# EUROPEAN PATENT APPLICATION

(11) **EP 2 518 851 A2**
(43) Date of publication of application: **31.10.2012**
(21) Application number: 12165775.3
(22) Date of filing: 26.04.2012
(51) Int. Cl.: H02J 1/14

(54) **Transformer structure for smart load balancing**

(30) Priority: 29.04.2011 US 201113097250
(71) Applicant: General Electric Company, Schenectady, NY 12345 (US)
(72) Inventor: Nielsen, Matthew Christian, Niskayuna, NY 12309 (US); Shah, Manoj Ramprasad, Niskayuna, NY 12309 (US); Reid, Andrew Andre, Niskayuna, NY 12309 (US)
(74) Representative: Picker, Madeline Margaret

(57) **Abstract**

A load balancing system includes a transformer (12) having a plurality of integrated sensors (35). A control system (30) that may be embedded within the transformer (12) is in electrical communication with the plurality of sensors (35). The control system (30) is configured to estimate or determine the state of health of the transformer (12). The state of health of the transformer (12) is based upon signals generated via the plurality of sensors (35). A load request that may be received that is compared to the state of health of the transformer (12) to determine if the transformer (12) can support the load request. The control system (30) determines whether or not the transformer (12) can provide electrical power based upon the estimated state of health of the transformer (12) and in response to the load request.

## Description

### BACKGROUND

This invention relates generally to distribution grid load control, and more particularly, to a communications and controls architecture for neighborhood transformers that improves grid stability and reduces stress on aging assets.

Control of loads on a distribution grid is an important part of a Smart Grid architecture. Better balancing of loads with generation can help with grid stability; and load shifting can help to reduce the stress on aging assets as well as to increase a utilities economics.

Another new and significant load will be appearing in the very near future. More specifically, this new and significant load can be identified as plug-in electric vehicles (PEVs). Charging the batteries on PEVs can occur at rates up to about 18 kW (SAE, level 2 specification). Most home charger installations will range from about 1.1 kW up to about 7.7 kW. Thus, in many locations around the United States, this represents a substantial increase in the load for the average home, potentially increasing a load by 1-3 times its typical rate.

The first asset that will see/feel PEV charging will be neighborhood transformers. In view of the foregoing, there is a need for a system and method of limiting the stress on neighborhood transformers during periods of time when multiple vehicles are plugged into the supply circuit and charging. It would be beneficial if the system and method provided improved grid stability and reduced stress on aging assets.

### BRIEF DESCRIPTION

According to one embodiment, a transformer load balancing system comprises: a transformer comprising a plurality of sensors integrated therewith; and a control system in electrical communication with the plurality of sensors and configured to estimate or determine the state of health of the transformer in response to signals generated via the plurality of sensors and further configured to compare a load request received from one or more loads to the state of transformer health to determine if the transformer can support the load request, and further to acknowledge or agree to provide electrical power to meet the load request or request agreement from the one or more loads to modify the load request.

According to another embodiment, a load balancing system comprises: a transformer comprising a plurality of sensors integrated therewith; and a communications and control system embedded within the transformer, the communications and control system in electrical communication with the plurality of sensors and configured to estimate the state of health of the transformer in response to a state estimator based upon signals generated via the plurality of sensors and to compare a load request to the estimated state to determine whether or not the transformer can support the load request, and further to provide electrical power based upon the estimated state of health of the transformer and in response to the load request; and a distribution management system configured to balance a grid load based upon the estimated state of transformer health.

According to yet another embodiment, a method of transformer load balancing comprises: providing a transformer comprising a plurality of sensors integrated therewith; providing a state estimator control system in electrical communication with the plurality of sensors; estimating the state of health of the transformer in response to the control system state estimator based upon signals generated via the plurality of sensors; comparing a load request via a power line carrier to the estimated state of health to determine if the transformer can support the load request; and providing electrical power based upon the estimated state of health of the transformer and in response to the load request.

### DRAWINGS

These and other features, aspects, and advantages of the present invention will become better understood when the following detailed description is read with reference to the accompanying drawing, wherein:
Figure 1 is a high level diagram illustrating a transformer load balancing system according to one embodiment;
Figure 2 is a high level diagram illustrating a transformer load balancing system according to another embodiment;
Figure 3 illustrates a control system suitable to use with the load balancing systems illustrated in Figures 1 and 2; and
Figure 4 is a system level diagram illustrating integration of a control system with a transformer to provide power in response to a load request according to one embodiment.

While the above-identified drawing figures set forth particular embodiments, other embodiments of the present invention are also contemplated, as noted in the discussion. In all cases, this disclosure presents illustrated embodiments of the present invention by way of representation and not limitation. Numerous other modifications and embodiments can be devised by those skilled in the art which fall within the scope of the principles of this invention.

### DETAILED DESCRIPTION

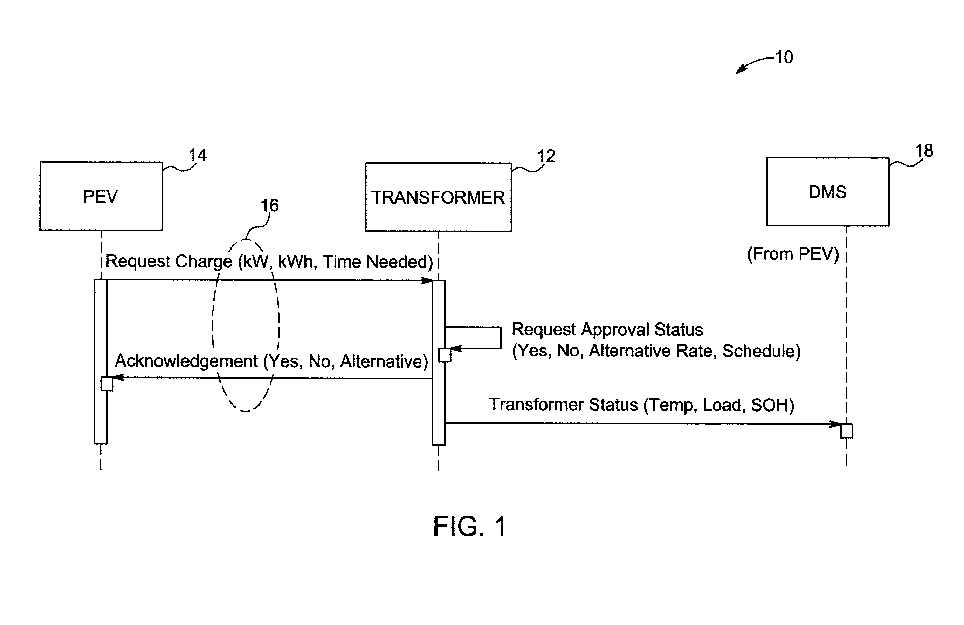

Figure 1 is a high level diagram illustrating a transformer load balancing system 10 according to one embodiment. More specifically, the transformer load balancing system 10 embodies a communications and controls architecture for neighborhood transformers. The transformer load balancing system 10 provides a local means of controlling household load, and particularly plug-in electric vehicles (PEVs).

According to one embodiment, the system 10 architecture combines communications and local control logic to a transformer to provide a smart transformer. The communications and local control logic is configured to record daily load, transformer temperature(s), and other significant parameters base upon the desired application. A transformer so equipped with the communications and local control logic is then able to estimate future states and process load requests. If for example, the future state such as oil temperature, is low enough, then the smart transformer will approve the new load request(s). Otherwise, the transformer may reject the load request(s) or modify one or more load requests to best fit into the estimated future state of the transformer.

With continued reference to Figure 1, the transformer load balancing system 10 comprises a smart transformer 12 that communicates with one or more PEVs 14 via a power line carrier 16 according to one embodiment. The transformer 12 comprises one or more sensors such as, without limitation, thermocouples integrated therewith. According to one aspect, the smart transformer 12 communications and local control logic comprises a state estimator control system in electrical communication with the sensor(s). The state estimator control system, described in further detail herein, estimates the state of health of the transformer 12 in response to the control system state estimator based upon signals generated via the sensor(s). The estimated state of health of the transformer 12 is then compared to a load request that is received according to one embodiment via a power line carrier (PLC) 16 to determine if the transformer can support the load request. According to one embodiment, the smart transformer 12 than communicates information such as, without limitation, temperature information, load information and state of health information to a distribution management system (DMS) 18 that controls the distribution of electrical power based upon the estimated state of health of the transformer and in response to the load request.

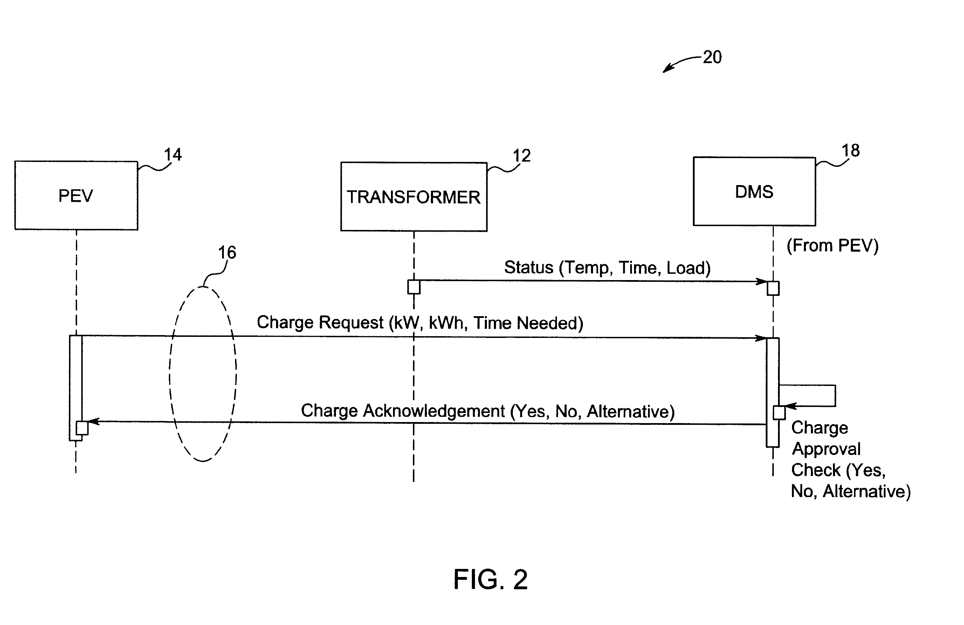

Figure 2 is a high level diagram illustrating a transformer load balancing system 20 according to another embodiment. Transformer load balancing system 20 operates in similar fashion to transformer load balancing system 10 described herein with reference to Figure 1. The decision regarding whether to approve, disapprove, or modify a load request however, is made at the distribution management system 18 level for the transformer load balancing system 20. In this embodiment, the smart transformer 12 communicates the requisite transformer information including, without limitation, temperature data, time data, load data, estimated state of transformer health data, and the like, to the DMS 18, thus enabling the DMS 18 to make the decision approving, disapproving or modifying the load request(s).

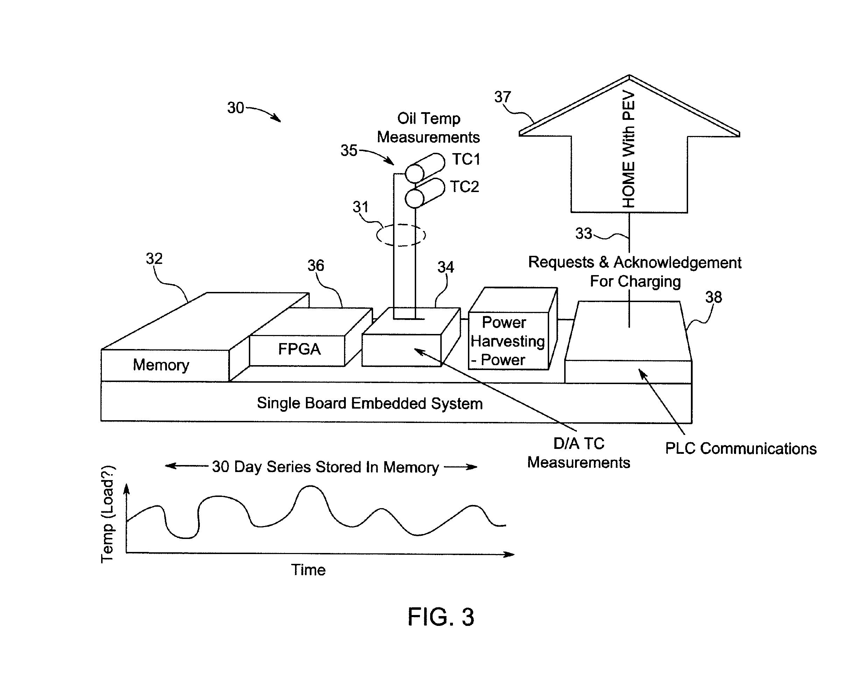

Figure 3 illustrates a control system 30 suitable to use with the load balancing systems 10, 20 respectively illustrated in Figures 1 and 2. Control system 30 comprises a small embedded system control board integrated with the transformer 12 depicted in Figures 1 and 2 according to one embodiment. According to one aspect, the control board comprises on-board memory 32 sufficient for storing at least one month of transformer history data. Control system 30 further comprises input/output ports 31, 33 and A/D conversion elements 34 configured for connection to different sensors 35 such as thermocouples. A small processor 36 such as, without limitation, an FPGA, will allow calculations and processing to happen. According to one aspect, algorithmic software including controls algorithms such as a state estimator to predict the state of health of the transformer over the next 12-24 hours are stored in the memory 32. Load requests are compared to the estimated state to determine if the transformer can support the additional load. If the transformer is not capable of supporting the additional load, the transformer control system 30 may communication a new alternative schedule or request. Communication to a residence 37 with PEV capability is via a PLC 33 that is supported by a power line carrier (PLC) communication unit 38 integrated with the control system board 30. According to one aspect, PLC can be confined to the primary or secondary side of the transformer 12, thus allowing for isolated communications to the homes and loads. According to another aspect, PLC can also use the existing wiring for the transmission medium. Messages that are transmitted and received via the PLC follow current standards being developed by the SAE and NIST organizations according to one aspect.

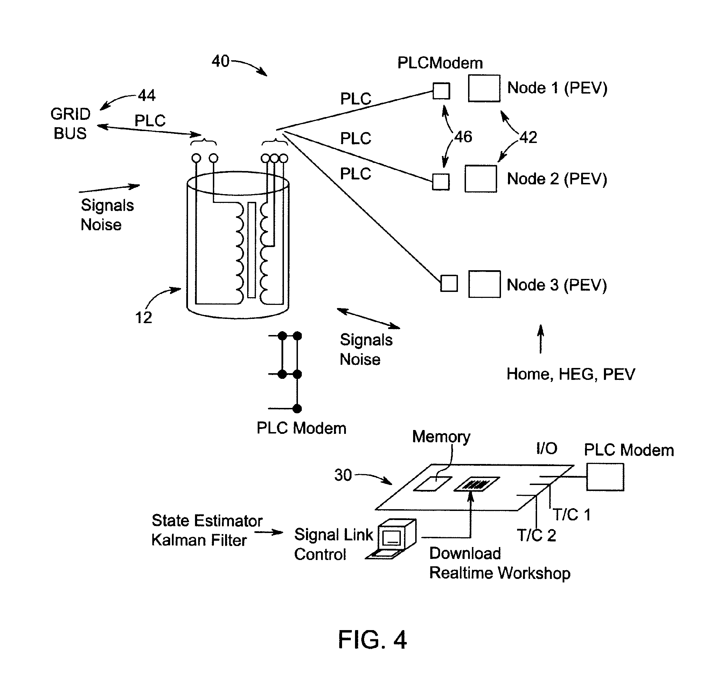

Figure 4 is a system level diagram 40 illustrating integration of a control system 30 with a local neighborhood transformer 12 to provide power in response to a load request according to one embodiment. Multiple plug-in electric vehicles 42 are plugged into the circuit being supplied by the transformer 12. The transformer primary is connected to the main grid bus 44 while the transformer secondary windings are in communication with the PEVs 42 via primary line carrier devices 46.

In summary explanation, a transformer load balancing system according to a plurality of embodiments has been described herein. Each embodiment comprises a transformer including one or more state sensors integrated therewith. A control system is in electrical communication with the sensor(s) and configured to estimate the state of health of the transformer in response to a state estimator. The state estimator estimates the state of health of the transformer based upon signals generated via the state sensor(s). The estimated state is compared to a load/charge request via a power line carrier to determine if the transformer can support the load/charge request, and further to provide electrical power, or to modify the load/charge request based upon the estimated state of health of the transformer.

The embodiments described herein advantageously provide a technique for controlling and protecting neighborhood power transformers beyond that achievable when relying solely on distribution management systems (DMSs), residential distribution management systems (DRMSs), home electrical management systems (EMSs), and the like. The embodiments described herein serve as a local control system, limiting the stress on transformers in large part due to knowledge about the state of health of a transformer that is not generally made available using techniques that rely solely on DMSs, DRMSs, home EMSs, and the like.

While the invention has been described in terms of various specific embodiments, those skilled in the art will recognize that the invention can be practiced with modification within the scope of the claims.

## Claims

1. A load balancing system comprising:
a transformer (12) comprising a plurality of sensors (35) integrated therewith; and
a control system (30) in electrical communication with the plurality of sensors (35) and configured to estimate or determine the state of health of the transformer (12) in response to signals generated via the plurality of sensors (35) and further configured to compare a load request received from one or more loads to the state of transformer health to determine if the transformer (12) can support the load request, and further to acknowledge or agree to provide electrical power to meet the load request or request agreement from the one or more loads to modify the load request.

2. The load balancing system according to claim 1, further comprising a distribution management system configured to balance a grid load based upon the state of transformer health.

3. The load balancing system according to claim 1 or claim 2, further comprising a state estimator configured to determine the state of health based upon the signals generated via the plurality of sensors.

4. The load balancing system according to claim 1, 2 or 3, wherein the distribution management system is further configured to balance the grid load based upon a load request approval status.

5. The load balancing system according to claim 4, wherein the load request approval status is selected from an approved load condition, a disapproved load condition, and a modified load condition.

6. The load balancing system according to any one of claims 1 to 5, wherein the control system is either integrated with the transformer (12), or is independent from the transformer (12).

7. The load balancing system according to any one of claims 1 to 6, wherein the transformer (12) is a residential neighborhood transformer servicing a plurality of homes.

8. The load balancing system according to any one of claims 1 to 7, wherein the load request is generated by one or more plug-in electric vehicle charging systems.

9. The load balancing system according to any one of claims 1 to 8, wherein the load request is based upon one or more residential loads.

10. The load balancing system according to any one of claims 1 to 9, wherein the load request is communicated to the control system via at least one of a power line carrier (PLC) and a wireless carrier.

11. The load balancing sysem according to any one of claims 1 to 10, wherein the transformer (12) is a residential neighborhood transformer servicing a plurality of homes.

12. The load balancing system according to any one of claims 1 to 11, wherein the control system (30) comprises:
one or more memory units configured to store a state estimator, state of transformer health data, and sensor signal data;
one or more analog/digital converters (34) configured to generate the sensor signal data in response to the sensor signals;
a plurality of input/output ports (33) in electrical communication with the plurality of sensors; and
a processor (36) configured to process the sensor signal data to generate the state of transformer health data.

13. The load balancing system according to any one of claims 1 to 12, wherein the modified load request is selected from a disapproved load condition, and a modified load condition.

14. A load balancing system of any one of claims 1 to 13, comprising:
a transformer (12) comprising a plurality of sensors (35) integrated therewith; and
a communications and control system (30) embedded within the transformer (12), the communications and control system (30) in electrical communication with the plurality of sensors (35) and configured to estimate or determine the state of health of the transformer (12) based upon signals generated via the plurality of sensors (35) and to compare a load request from one or more loads to the state of transformer health to determine if the transformer (12) can support the load request, and further to acknowledge or agree to provide electrical power to meet the load request or request agreement from the one or more loads to modify the load request.

15. A method of transformer load balancing, the method comprising:
providing a transformer (12) comprising a plurality of sensors (35) integrated therewith;
providing a control system (30) in electrical communication with the plurality of sensors (35);
estimating or determining the state of health of the transformer (12) via the control system (30) in response to signals received from the plurality of sensors (35);
comparing a load request received from one or more loads to the state of transformer health to determine if the transformer can support the load request; and
acknowledging or agreeing to provide electrical power to meet the load request or requesting agreement from the one or more loads to modify the load request based on the state of transformer health.
